# EUROPEAN PATENT APPLICATION

(11) **EP 4 603 465 A2**
(43) Date of publication of application: **20.08.2025**
(21) Application number: 25157477.8
(22) Date of filing: 12.02.2025
(51) Int. Cl.: C04B 35/185, C04B 35/195, C04B 35/20, C04B 35/443, C04B 35/565, C04B 35/628, C04B 35/80

(54) **CERAMIC MATRIX COMPOSITE CONTAINING SILICON CARBIDE AND OXIDE PHASE**

(30) Priority: 16.02.2024 US 202418444137
(71) Applicant: RTX Corporation, Farmington, CT 06032 (US)
(72) Inventor: JACKSON III, Richard Wesley, Farmington, 06032 (US); HOLOWCZAK, John E., Farmington, 06032 (US); BEALS, James T., Farmington, 06032 (US)
(74) Representative: Dehns

(57) **Abstract**

A ceramic matrix composite includes a plurality of ceramic fibers (102), an interface coating (106) disposed on the plurality of ceramic fibers (102), and a ceramic matrix (104) surrounding the plurality of ceramic fibers (102). The ceramic matrix (104) includes a silicon carbide phase (104a) and an oxide phase (104b). The oxide phase (104b) includes at least two of cordierite, mullite, sapphirine, spinel, alumina, periclase, and forsterite. A method of fabricating a ceramic matrix composite is also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

One example ceramic material is a ceramic matrix composite ("CMC"), which includes, generally, ceramic-based reinforcements (such as fibers) in a ceramic-based material. CMCs have high temperature resistance, and are therefore being considered for use in gas turbine engines, which have areas that operate at very high temperatures. For instance, CMCs are being considered for use in the compressor section, and for airfoils and/or blade outer air seals ("BOAS") in the compressor/turbine sections. Despite its high temperature resistance, there are unique challenges to implementing CMC components in gas turbine engines.

### SUMMARY

From one aspect, there is provided a ceramic matrix composite that, among other possible things, includes a plurality of ceramic fibers, an interface coating disposed on the plurality of ceramic fibers, and a ceramic matrix surrounding the plurality of ceramic fibers. The ceramic matrix includes a silicon carbide phase and an oxide phase. The oxide phase includes at least two of cordierite, mullite, sapphirine, spinel, alumina, periclase, and forsterite.

In a further example of the foregoing, the oxide phase includes at least one of alumina and mullite.

In a further example of any of the foregoing, the oxide phase includes at least one of cordierite and sapphirine.

In a further example of any of the foregoing, the oxide phase includes periclase.

In a further example of any of the foregoing, the oxide phase includes at least one of spinel and forsterite.

In a further example of any of the foregoing, the matrix further includes particulate silicon carbide.

In a further example of any of the foregoing, the particulate silicon carbide comprises about 10 - about 20 % by volume of the matrix.

In a further example of any of the foregoing, the plurality of fibers are woven silicon carbide.

In a further example of any of the foregoing, the plurality of fibers comprise about 30 - about 50 % by volume of the ceramic matrix composite.

In a further example of any of the foregoing, the matrix comprises about 10 - about 30 % by volume of the silicon carbide phase and about 20 - about 90 % by volume of the oxide phase.

In a further example of any of the foregoing, at least about 75% by volume of the oxide phase comprises cordierite, mullite, and sapphirine.

In a further example of any of the foregoing, at least about 75% by volume of the oxide phase comprises periclase, spinel and forsterite.

There is also provided a ceramic matrix composite that, among other possible things, includes a plurality of ceramic fibers, an interface coating disposed on the plurality of ceramic fibers, and a ceramic matrix surrounding the plurality of ceramic fibers. The ceramic matrix includes a silicon carbide phase and an oxide phase. The oxide phase includes cordierite, mullite, and sapphirine.

In a further example of the foregoing, the matrix further includes particulate silicon carbide.

In a further example of any of the foregoing, the matrix comprises about 10 - about 30 % by volume of the silicon carbide phase and about 20 - about 40 % by volume of the oxide phase.

There is also provided a ceramic matrix composite that, among other possible things, includes a plurality of ceramic fibers, an interface coating disposed on the plurality of ceramic fibers, and a ceramic matrix surrounding the plurality of ceramic fibers. The ceramic matrix includes a silicon carbide phase and an oxide phase. The oxide phase includes spinel, periclase, and at least one of forsterite and enstatite.

In a further example of the foregoing, the matrix further includes particulate silicon carbide.

In a further example of any of the foregoing, the matrix comprises about 10 - about 30 % by volume of the silicon carbide phase and about 20 - about 40 % by volume of the oxide phase.

There is also provided a method of fabricating a ceramic matrix composite component that, among other possible things, includes arranging a plurality of fibers into a preform, applying an interface coating on the plurality of fibers, infiltrating the preform with a silicon carbide matrix phase, infiltrating the preform with a first constituent of an oxide phase and a precursor of a second constituent of the oxide phase such that the first and second constituents enter into a porosity of the silicon carbide matrix phase, and heat treating the preform. Said heat treatment converts the precursor into the second constituent.

In a further example of the foregoing, where the first constituent is alumina, mullite, spinel, magnesia, or mixtures thereof.

In a further example of any of the foregoing, the first constituent is infiltrated into the preform via a slurry.

In a further example of any of the foregoing, the precursor is infiltrated into the preform in the form of a molten glass.

In a further example of any of the foregoing, the molten glass includes at least one of magnesium oxide, aluminum oxide, and silicon dioxide.

In a further example of any of the foregoing, after the heat treatment, the oxide phase includes at least one of cordierite, sapphirine, spinel, and forsterite.

There is also provided a ceramic matrix composite that, among other possible things, includes a plurality of ceramic fibers and a chemical-vapor-infiltration-deposited interface coating disposed on the plurality of ceramic fibers. The interface coating includes at least one layer of silicon carbide. The ceramic matrix composite also includes a ceramic matrix surrounding the plurality of ceramic fibers. The ceramic matrix includes a silicon carbide phase and an oxide phase. The oxide phase includes at least one of cordierite, mullite, sapphirine, spinel, alumina, periclase, and forsterite.

In a further example of the foregoing, the oxide phase includes at least one of alumina and mullite.

In a further example of any of the foregoing, the oxide phase includes periclase.

In a further example of any of the foregoing, the matrix further includes particulate silicon carbide.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates an example CMC component for the gas turbine engine of Figure 1.
Figure 3 illustrates pores of the example CMC component in Figure 2 during fabrication of the CMC component.

### DETAILED DESCRIPTION

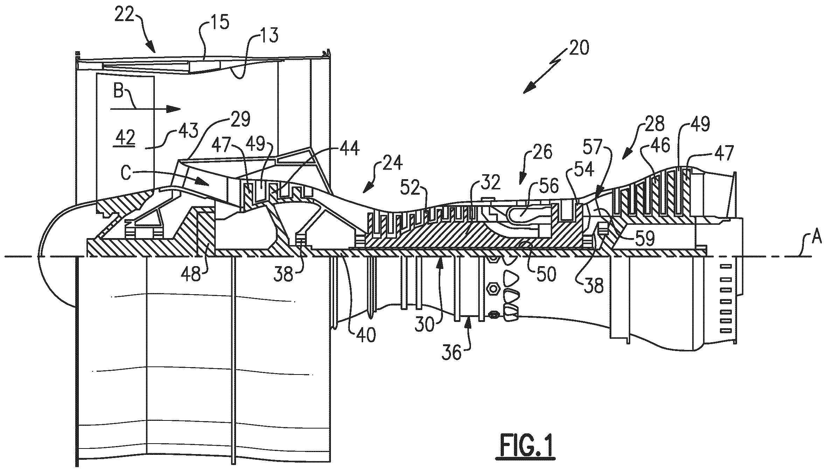

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The low pressure turbine 46 incudes airfoils 60. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. **In** a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R))^0.5. The "Low corrected fan tip speed" as disclosed herein according to one non-limiting embodiment is less than about 1150 ft / second (350.5 meters/second).

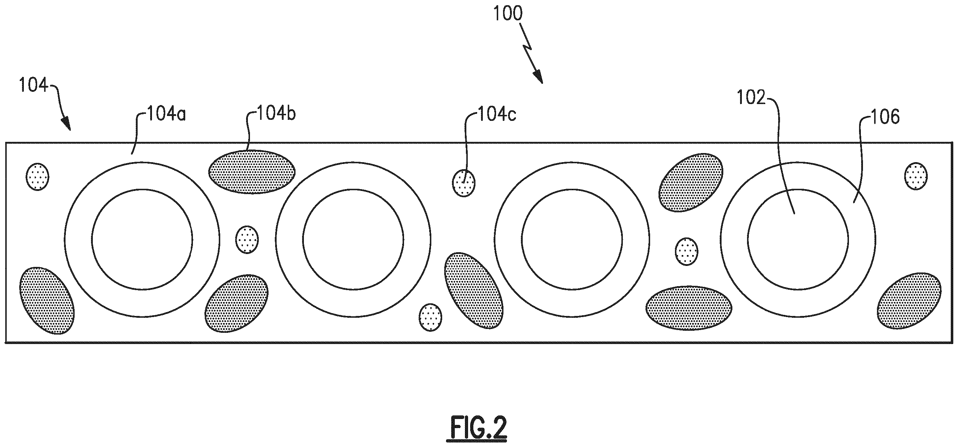

Ceramic matrix composites ("CMC") can be employed in various areas of the engine described above and shown in Figure 1. For instance, CMC components, or components that are at least partly CMC, can be used in the combustor section 26, or in the turbine/compressor sections 28/24. Figure 2 shows one non-limiting example CMC component 100, which is for instance an airfoil 100 used in the turbine section 28 (see also Figure 1), but can be any other component of the engine 20 in other examples.

As shown in Figure 2, which is a cross-section of a CMC component 100, the component 100 generally includes a plurality of ceramic-based fibers 102 disposed in a ceramic-based matrix 104. The fibers 102 in Figure 2 are shown arranged in a unidirectional pattern, but other patterns including various weave patterns known in the art are contemplated. In some examples, the fibers 102 are arranged in bundles or tows. The fibers 102 may be silicon carbide fibers but other materials as are known in the art are contemplated. In a particular example the fibers 102 comprise about 30 - about 50 % by volume of the CMC component 100.

An interface coating 106 is disposed on each of the fibers 102. In one example, the interface coating 106 is silicon carbide. In one example, the interface coating 106 is boron nitride. The interface coating 106 may also comprise multiple layers of silicon carbide, boron nitride, or both. In one example the interface coating 106 is at least about 0.1 microns thick. In a further example the interface coating 106 is at least about 0.5 microns thick. In a still further example the interface coating 106 is at least about 2 microns thick. As will be discussed further below, the interface coating 106 is thick enough to protect the fibers 102 during formation of the CMC component 100. In one example, the interface coating 106 is a bilayer in which the inner layer is at least 0.1 microns thick boron nitride and the outer layer is at least 0.1 microns thick silicon carbide. In a particular example, the interface coating 106 is a bilayer in which the inner layer is a 200 nm thick layer of boron nitride and the outer layer is a 500 nm thick layer of silicon carbide.

In a particular example the interface coating 106 is applied by chemical vapor infiltration (CVI) which produces silicon carbide and boron nitride with distinct microstructures

Though CMC materials have good capabilities for use in the high temperature environment of the gas turbine engine 20, traditional CMC components include coatings such as thermal barrier coatings and/or environmental barrier coatings to improve their temperature and environmental resistance. However, application of coatings changes the dimensions and potentially the geometry of the CMC component. Moreover, fabrication of traditional CMC components is often expensive and requires long processing durations due to challenges with formation of the matrix that surrounds the fibers. For example the matrix can be fabricated using chemical vapor infiltration (CVI), which involves long deposition times, or polymer infiltration and pyrolysis (PIP), which involves many infiltration steps. Both CVI and PIP also use expensive precursors with low yield. Processing the matrix at least partly by other infiltration techniques such as those discussed below reduces the cost and processing times for fabricating CMC components and may reduce the need for additional temperature and/or environmental protection via coatings in some cases.

To that end, the CMC component 100 discussed herein has a matrix 104 with improved temperature capabilities owing to the inclusion of carbide and oxide material. Therefore, coatings can be omitted entirely, or be thinner than on prior art CMC components 100.

The matrix 104 includes a silicon carbide phase 104a and an oxide phase 104b. The silicon carbide phase 104a makes up about 10 - about 70 % by volume of the matrix 104. The oxide phase 104b makes up about 20 to about 60 % by volume of the matrix 104. In some examples, the matrix 104 further includes particulate silicon carbide 104c dispersed in the matrix 104. In a particular example, the particulate silicon carbide comprises about 10 to about 20 % by volume of the matrix.

The oxide phase includes at least two of the phases cordierite (Mg₂Al₄Si₅O₁₈), mullite (Al₆Si₂O₁₃), sapphirine (Mg₄Al₁₀Si₂O₂₃), spinel (MgAl₂O₄), alumina (Al₂O₃), periclase (MgO), enstatite (MgSiO₃), and forsterite (Mg₂SiO₄). In a particular example, the oxide phase 104b includes at least one of alumina and mullite and at least one of cordierite, sapphirine, spinel, and forsterite. In a particular example, at least about 75% by volume of the oxide phase 104b includes corderite, mullite, and sapphirine. The oxide phase has good coefficient of thermal expansion matching with other aspects of the CMC component 100 such as the fibers 102 and interface coating 106.

The matrix 104 has thermal expansion, thermal conductivity, and density properties selected to be compatible with other aspects of the CMC component 100 and based on the desired use for the CMC component 100. In a particular example, the matrix 104 is thermally stable to a temperature of at least about 2600 degrees F (1427 degrees C). That is, the matrix 104 and more generally the CMC component 100 is still suitable for use even when exposed to a temperature of up to about 2600 degrees F (1427 degrees C).

**In** a particular example, the CMC component 100 includes woven silicon carbide fibers 102 comprising about 30 - about 50 % by volume of the CMC component 100. The interface coating 106 is silicon carbide. The CMC component 100 also includes a matrix 104 comprising about 10 to about 30 % by volume silicon carbide phase 104a, about 20 to about 60 % by volume oxide phase 104b, wherein at least about 75% by volume of the oxide phase comprises cordierite, mullite, and sapphirine.

**In** a particular example, the CMC component 100 includes woven silicon carbide fibers 102 comprising about 30 - about 50 % by volume of the CMC component 100. The interface coating 106 is silicon carbide. The CMC component 100 also includes a matrix 104 comprising about 10 to about 30 % by volume silicon carbide phase 104a, about 20 to about 40 % by volume oxide phase 104b, wherein at least about 75% by volume of the oxide phase comprises cordierite, mullite, and sapphirine, and about 10 to about 20% by volume particulate silicon carbide 104c.

The CMC component 100 can be fabricated as follows. The fibers 102 are arranged into a preform. The interface coating 106 is applied to the fibers 102 by a vapor deposition process. The silicon carbide phase 104a of the matrix 104 is then infiltrated into the preform. Where the interface coating 106 is also silicon carbide the interface coating 106 and matrix 104 may be applied/infiltrated into the preform using the same vapor deposition process. In some examples the process parameters may be tuned such that the interface coating 106 is initially denser than the matrix 104, as is well known in the art.

The preform is then infiltrated with a slurry comprising at least one constituent of the oxide phase 104b and/or precursor(s) of a constituent of the oxide phase 104b constituents, and optional particulate silicon carbide, in a carrier fluid. The slurry enters into pores in the matrix 104 and deposits the oxide phase 104b constituents or precursor(s) therein. In a particular example, the oxide phase 104b in the slurry includes at least one of alumina and mullite.

In some examples, the precursor(s) of the oxide phase 104b constituents are glasses such as magnesium oxide, aluminum oxide, and/or silicon dioxide or combinations thereof. Rather than being introduced into the preform via the slurry, the glasses may be applied to the preform in a molten state and flowed into the composite by any known method. In a particular example, the molten glass includes about 33 mol. % MgO, about 19 mol. % AlO_{1.5}, and about 44 mol. % SiO₂. In another particular example, the molten glass includes a series of molten glasses each comprising MgO, AlO_{1.5}, and SiO₂ but each having a different eutectic point. The varied eutectic points allow additional flexibility in selecting the phases that result after heat treatment, which will be discussed below. Table 1 shows an example series of four glasses:

**Table 1**

| | Mol. % SiO₂ | Mol. % AlO_{1.5} | Mol. % MgO | Eutectic point (degrees C) |
|---|---|---|---|---|
| Glass 1 | 0.43 | 0.37 | 0.19 | 1381 |
| Glass 2 | 0.42 | 0.24 | 0.34 | 1455 |
| Glass 3 | 0.61 | 0.14 | 0.26 | 1445 |
| Glass 4 | 0.54 | 0.31 | 0.15 | 1360 |

After the molten glass is infiltrated into the preform, glass particles such as MgO or AlO_{1.5} remain in the pores of the matrix 104. The glass particles may be in some examples less than about 100 microns in diameter. In further examples, the glass particles are less than about 25 microns in diameter.

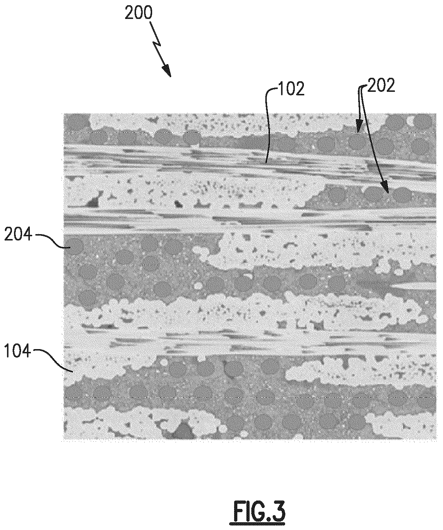

In a particular example, the slurry contains alumina. For example the solids content of the slurry may be at least about 70% alumina. In a more particular example the remainder of the solids content of the slurry is silicon carbide particles. After infiltration of the slurry into the preform, between about 33 % (1 out of 3) and about 67 % (2 out of 3) of the porosity in the matrix 104 fills with the solid constituents of the slurry. Figure 3 shows the preform 200 with pores 202. Solid slurry constituents 204 are disposed in the pores 202. In a particular example, the slurry deposits alumina into the pores such that about 35% of the porosity of the matrix 104 fills with alumina. In a further example, if used, about 15% of the porosity of the matrix 104 fills with silicon carbide particles.

After infiltration of the molten glass, the matrix 104 comprises ratio of volume of alumina to volume of molten glass that ranges from about 1:2 to 2:1. In a particular example, the matrix 104 comprises a ratio of volume of alumina to volume of molten glass that ranges from about 1:2 to 1:1. In another example, the matrix 104 a comprises ratio of volume of alumina to volume of molten glass that ranges from about 0.51 to about 1.16 which results in formation of cordierite, sapphirine, and mullite after subsequent heat treatment discussed below.

In another example, the slurry contains mullite and alumina. For example the solids content of the slurry may be at least about 50% alumina and at least about 20% mullite. The matrix 104 a comprises ratio of volume of alumina and mullite to volume of molten glass that ranges from about 0.75 to about 1.25 which results in the presence of at least one cordierite and sapphirine after subsequent heat treatment discussed below. In a particular example, the heat treatment results in the presence of cordierite, sapphirine, and mullite. In this case there is a higher ratio of alumina and mullite to glass and the resulting matrix 104 contains more mullite and cordierite which decreases the thermal expansion coefficient of the matrix 104 compared to a matrix without any oxide phase 104b.

In another example, the slurry contains spinel and alumina. For example the solids content of the slurry may be at least about 60% alumina and at least about 10% spinel. The matrix 104 a comprises ratio of volume of alumina and spinel to volume of molten glass that ranges from about 0.75 to about 1.25 which results in formation of cordierite, sapphirine, and mullite after subsequent heat treatment discussed below. In this case there the resulting matrix 104 contains more sapphirine which increases the thermal conductivity of the matrix compared to a matrix without any oxide phase 104b.

In a particular example, the slurry contains MgO ( magnesia). For example the solids content of the slurry may be at least about 70% MgO. In a more particular example the remainder of the solids content of the slurry is silicon carbide particles. After infiltration of the slurry into the preform, between about 33 % (1 out of 3) and about 67 % (2 out of 3) of the porosity in the matrix 104 fills with the solid constituents of the slurry. Figure 3 shows the preform 200 with pores 202. Solid slurry constituents 204 are disposed in the pores 202. In a particular example, the slurry deposits MgO into the pores such that about 35% of the porosity of the matrix 104 fills with MgO. In a further example, if used, about 15% of the porosity of the matrix 104 fills with silicon carbide particles.

After infiltration of the molten glass, the matrix 104 comprises a ratio of volume of MgO to volume of molten glass that ranges from about 1:2.5 to 2: 1. In a particular example, the matrix 104 comprises a ratio of volume of MgO to volume of molten glass that ranges from about 1:2.5 to 1:1. In another example, the matrix 104 a comprises a ratio of volume of magnesia to volume of molten glass that ranges from about 0.4 to about 1.0 which results in the presence of at least one of spinel (MgAl₂O₄) and forsterite (Mg₂SiO₄). In a further example the heat treatment results in the presence of spinel (MgAl₂O₄), forsterite (Mg₂SiO₄), and periclase (a crystalline form of magnesia, MgO).

The matrix 104 comprising periclase, spinel, and forsterite can be stable to temperatures in excess of 1600 degrees C. The coefficient of thermal expansion for the phases periclase, spinel and forsterite are each 25% greater than SiC.

The preform is then heat treated to convert any precursors to the desired oxide phase 104b. During the heat treatment various phase crystals grow off of the glass particles. The temperature of the heat treatment is selected to form the desired oxide phase(s) 104b according to known properties of the phase(s). The heat treatment may include multiple steps carried out at different temperatures as is known in the art. In a particular example, the heat treatment is performed at temperatures up to about 1450 degrees C, which may promote sapphirine formation and limit spinel formation, allowing an equilibrium to be reached between the multiple phases present. In another particular example, the heat treatment is above about 1350 degrees C. In another particular example, a heat treatment above 1100 degrees C occurs following the 1450 degrees C heat treatment.

During the application of the slurry and/or the molten glass, and subsequent heat treatment, the interface coating 106 protects the fibers 102 from interaction with the slurry and/or molten glass constituents, which can be particularly reactive with respect to silicon carbide. That is, the fibers 102 remain in substantially their original state from the preform to the CMC component 100.

In one particular example the CMC component 100 is fabricated as follows. Woven silicon carbide fibers 102 are arranged into a preform. A silicon carbide interface coating 106 and matrix 104 is deposited on the fibers 102 by a vapor deposition process. A slurry comprising alumina, mullite, and/or silicon carbide fibers is infiltrated into the matrix 104. A glass comprising 33 mol. % MgO, about 19 mol. % AlO_{1.5}, and about 44 mol. % SiO₂ is melted into the matrix 104 at temperature between about 1350 and about 1500 degrees C. After the infiltration of the slurry and molten glass, the porosity of the matrix 104 contains between about 25 and about 75 % by volume alumina, between about 35 and about 80 % by volume mullite, and between about 1 and about 50% silicon carbide particles. The CMC component 100 is heat treated between about 1100 and 1400 degrees C. The resulting CMC component 104 comprises about 30 to about 50 % by volume fibers 102 and a matrix 104 that comprises about 10 to about 30 % by volume silicon carbide phase 104a and about 20 to about 60 % by volume oxide phase 104b, where at least about 75 % by volume of the oxide phase 104b comprises cordierite, mullite, and sapphirine.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A ceramic matrix composite, comprising:
a plurality of ceramic fibers (102);
an interface coating (106) disposed on the plurality of ceramic fibers (102); and
a ceramic matrix (104) surrounding the plurality of ceramic fibers (102), the ceramic matrix including a silicon carbide phase (104a) and an oxide phase (104b), wherein the oxide phase (104b) includes at least two of cordierite, mullite, sapphirine, spinel, alumina, periclase, and forsterite.

2. The ceramic matrix composite of claim 1, wherein the oxide phase (104b) includes at least one of alumina and mullite.

3. The ceramic matrix composite of claim 1 or 2, wherein the oxide phase (104b) includes at least one of cordierite and sapphirine.

4. The ceramic matrix composite of any preceding claim, wherein the oxide phase (104b) includes periclase, optionally wherein the oxide phase (104b) includes at least one of spinel and forsterite.

5. The ceramic matrix composite of any preceding claim, wherein the matrix (104) further includes particulate silicon carbide (104c), optionally wherein the particulate silicon carbide (104c) comprises about 10 - about 20 % by volume of the matrix (104).

6. The ceramic matrix composite of any preceding claim, wherein the plurality of ceramic fibers (102) are woven silicon carbide.

7. The ceramic matrix composite of any preceding claim, wherein the plurality of ceramic fibers (102) comprise about 30 - about 50 % by volume of the ceramic matrix composite.

8. The ceramic matrix composite of any preceding claim, wherein the matrix (104) comprises about 10 - about 30 % by volume of the silicon carbide phase (104a) and about 20 - about 90 % by volume of the oxide phase (104b), optionally about 20 - about 40% by volume of the oxide phase (104b).

9. The ceramic matrix composite of claim 8, wherein:
at least about 75% by volume of the oxide phase (104b) comprises cordierite, mullite, and sapphirine; or
at least about 75% by volume of the oxide phase (104b) comprises periclase, spinel and forsterite.

10. The ceramic matrix composite of any preceding claim, wherein the oxide phase (104b) includes spinel, periclase, and at least one of forsterite and enstatite.

11. The ceramic matrix composite of any preceding claim, wherein the interface coating (106) is a chemical-vapor-infiltration-deposited interface coating (106) and includes at least one layer of silicon carbide.

12. A method of fabricating a ceramic matrix composite component, comprising:
arranging a plurality of fibers (102) into a preform (200);
applying an interface coating (106) on the plurality of fibers (102);
infiltrating the preform (200) with a silicon carbide matrix phase (104);
infiltrating the preform (200) with a first constituent (204) of an oxide phase (104b) and a precursor of a second constituent of the oxide phase (104b) such that the first and second constituents (204) enter into a porosity (202) of the silicon carbide matrix phase (104); and
heat treating the preform (200), wherein said heat treatment converts the precursor into the second constituent.

13. The method of claim 12, wherein:
the first constituent (204) is alumina, mullite, spinel, magnesia, or mixtures thereof; and/or
the first constituent (204) is infiltrated into the preform (200) via a slurry.

14. The method of claim 12 or 13, wherein the precursor is infiltrated into the preform (200) in the form of a molten glass, optionally wherein the molten glass includes at least one of magnesium oxide, aluminum oxide, and silicon dioxide.

15. The method of any of claims 12 to 14, wherein after the heat treatment, the oxide phase (104b) includes at least one of cordierite, sapphirine, spinel, and forsterite.
